# EUROPEAN PATENT APPLICATION

(11) **EP 4 113 299 A2**
(43) Date of publication of application: **04.01.2023**
(21) Application number: 22196817.5
(22) Date of filing: 21.09.2022
(51) Int. Cl.: G06F 9/48

(54) **TASK PROCESSING METHOD AND DEVICE, AND ELECTRONIC DEVICE**

(30) Priority: 28.09.2021 CN 202111141621
(71) Applicant: Beijing Baidu Netcom Science Technology Co., Ltd., Beijing 100085 (CN)
(72) Inventor: LIU, Chong, Beijing, 100085 (CN); ZHUO, Zecheng, Beijing, 100085 (CN); HUANG, Qiang, Beijing, 100085 (CN); XU, Siqi, Beijing, 100085 (CN); ZHANG, Wenjun, Beijing, 100085 (CN); HONG, Saiding, Beijing, 100085 (CN)
(74) Representative: Studio Torta S.p.A.

(57) **Abstract**

A task processing method, a task processing device and an electronic device are provided, which relate to the field of cloud computing technology and big data technology, in particular to the field of task processing technology. The task processing method includes: obtaining a task processing request for a to-be-processed task, the task processing request including processing time information of the to-be-processed task and a service type of the to-be-processed task; in the case that the processing time information of the to-be-processed task meets a triggering condition, writing the to-be-processed task into a corresponding message queue in accordance with the service type of the to-be-processed task, one message queue corresponding to a respective one service type; and processing the to-be-processed task in the message queue, to obtain a task processing result of the to-be-processed task.

## Description

### TECHNICAL FIELD

The present disclosure relates to the field of Internet technology, in particular to the field of cloud computing technology and big data technology, more particularly to a task processing method, a task processing device and an electronic device.

### BACKGROUND

Along with the development of the Internet technology, task processing is an indispensable procedure in an Internet project. For example, in some Internet projects, some tasks need to be executed at a certain time point, some tasks need to be executed at a certain time interval, and some tasks are executed within a long time period and it is necessary to flexibly inquire a processing result and a processing state thereof. Currently, a separate task processing system is created with respect to the Internet project, so as to process a task in the project in an online or offline manner.

### SUMMARY

An object of the present disclosure is to provide a task processing method, a task processing device and an electronic device.

In a first aspect, the present disclosure provides in some embodiments a task processing method, including: obtaining a task processing request for a to-be-processed task, the task processing request including processing time information of the to-be-processed task and a service type of the to-be-processed task; in the case that the processing time information of the to-be-processed task meets a triggering condition, writing the to-be-processed task into a corresponding message queue in accordance with the service type of the to-be-processed task, one message queue corresponding to a respective one service type; and processing the to-be-processed task in the message queue, so as to obtain a task processing result of the to-be-processed task.

In a second aspect, the present disclosure provides in some embodiments a task processing device, including: a first obtaining module configured to obtain a task processing request for a to-be-processed task, the task processing request including processing time information of the to-be-processed task and a service type of the to-be-processed task; a writing module configured to, in the case that the processing time information of the to-be-processed task meets a triggering condition, write the to-be-processed task into a corresponding message queue in accordance with the service type of the to-be-processed task, one message queue corresponding to a respective one service type; and a processing module configured to process the to-be-processed task in the message queue, so as to obtain a task processing result of the to-be-processed task.

In a third aspect, the present disclosure provides in some embodiments an electronic device, including at least one processor, and a memory in communication with the at least one processor and configured to store therein an instruction executed by the at least one processor. The instruction is executed by the at least one processor so as to implement the above-mentioned task processing method.

In a fourth aspect, the present disclosure provides in some embodiments a non-transient computer-readable storage medium storing therein a computer instruction. The computer instruction is executed by a computer so as to implement the task processing method in the first aspect.

In a fifth aspect, the present disclosure provides in some embodiments a computer program product including a computer program. The computer program is executed by a processor so as to implement the task processing method in the first aspect.

According to the embodiments of the present disclosure, the message queue corresponds to the service type of the to-be-processed task, i.e., the to-be-processed tasks of different service types correspond to different message queues respectively, so it is able to perform classified management on, and effectively execute, the to-be-processed tasks on the basis of the service types, and receive and process tasks of different service types through only one task processing device. As compared with the related art where a respective task processing system or device needs to be created for each service type, in the embodiments of the present disclosure, it is able to reduce system resources, and improve the development efficiency of the task processing.

It should be understood that, this summary is not intended to identify key features or essential features of the embodiments of the present disclosure, nor is it intended to be used to limit the scope of the present disclosure. Other features of the present disclosure will become more comprehensible with reference to the following description.

### BRIEF DESCRIPTION OF THE DRAWINGS

The following drawings are provided to facilitate the understanding of the present disclosure, but shall not be construed as limiting the present disclosure. In these drawings,
Fig. 1 is a flow chart of a task processing method according to an embodiment of the present disclosure;
Fig. 2 is another flow chart of the task processing method according to an embodiment of the present disclosure;
Fig. 3 is a schematic view showing a task processing device according to an embodiment of the present disclosure; and
Fig. 4 is a block diagram of an electronic device for implementing the task processing method according to an embodiment of the present disclosure.

### DETAILED DESCRIPTION

In the following description, numerous details of the embodiments of the present disclosure, which should be deemed merely as exemplary, are set forth with reference to accompanying drawings to provide a thorough understanding of the embodiments of the present disclosure. Therefore, those skilled in the art will appreciate that modifications or replacements may be made in the described embodiments without departing from the scope and spirit of the present disclosure. Further, for clarity and conciseness, descriptions of known functions and structures are omitted.

The present disclosure provides in some embodiments a task processing method.

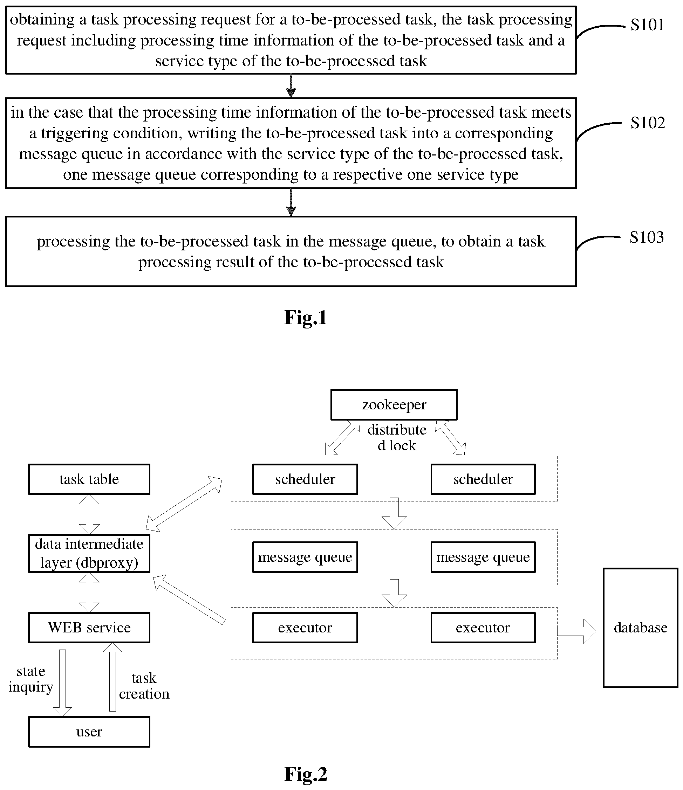

As shown in Fig. 1, the task processing method includes the following steps.

S101: obtaining a task processing request for a to-be-processed task, the task processing request including processing time information of the to-be-processed task and a service type of the to-be-processed task.

It should be appreciated that, the task processing method involved in the embodiments of the present disclosure may be applied to a task processing platform, a task processing system or a task processing device. For ease of understanding, the following description will be given by taking the task processing device as an example.

In the embodiments of the present disclosure, the task processing device may be any specific electronic device for performing the task processing, e.g., a computer or a mobile phone. In a possible embodiment of the present disclosure, the task processing device includes a task creation interface, so as to obtain the to-be-processed task uploaded or created by a user through the task creation interface, thereby to obtain a task processing request for the to-be-processed task. When the to-be-processed task is uploaded or created by the user, the processing time information and the service type of the to-be-processed task may be written simultaneously. The processing time information refers to a time for processing the to-be-processed task, e.g., the to-be-processed task is performed at a certain time point regularly or at a certain time interval. The service types may be classified in various ways. For example, the service type may be associated with a service emergency level, e.g., an extraordinary emergency service, an emergency service or a common service; or the service type may be associated with the processing time information of a service, e.g., the services executed at a certain time point regularly form a group, and the services executed at a certain time interval form another group; or the service type may be associated with an industry to which the service belongs, e.g., a medical service, an education service or real estate service. It should be noted that, there may exist the other service types, which will not be particularly defined herein.

S102: in the case that the processing time information of the to-be-processed task meets a triggering condition, writing the to-be-processed task into a corresponding message queue in accordance with the service type of the to-be-processed task, one message queue corresponding to a respective one service type.

In a possible embodiment of the present disclosure, upon the receipt of the task processing request for the to-be-processed task, the task processing device may set a timer for the to-be-processed task in accordance with the processing time information of the to-be-processed task. For example, the task processing device may write a timing progress for the to-be-processed task, and the processing time information of the to-be-processed task may meet the triggering condition when it reaches a processing time of the to-be-processed task. Further, the to-be-processed task may be written into a corresponding message queue.

In the embodiments of the present disclosure, one message queue corresponds to a respective one service type. In other words, the to-be-processed tasks of different services types are written into different message queues. For example, when the service types include extraordinary emergency service, emergency service and common service, the message queues include a message queue for the extraordinary emergency service, a message queue for the emergency service and a message queue for the common service. When the to-be-processed task is an extraordinary emergency service, it may be written into the message queue for the extraordinary emergency service. At this time, the task processing device may process a task in the message queue for the extraordinary emergency service preferentially, i.e., the to-be-processed task may be processed preferentially.

S103: processing the to-be-processed task in the message queue, so as to obtain a task processing result of the to-be-processed task.

In the embodiments of the present disclosure, after the to-be-processed task has been written into the corresponding message queue, the task processing device may process the to-be-processed task in the message queue, so as to obtain the task processing result of the to-be-processed task.

In a possible embodiment of the present disclosure, the task processing device may process the to-be-processed task in the message queue through an executor, each message queue corresponds to a respective one type of executor, and the to-be-processed task is transmitted to the corresponding executor for the subsequent processing. The to-be-processed tasks in the message queue may be transmitted to the corresponding executor in accordance with a chorological order of the processing times of the to-be-processed tasks. Upon the receipt of the to-be-processed task in the message queue, the executor may perform a corresponding processing operation on the to-be-processed task in accordance with task information of the to-be-processed task.

It should be appreciated that, the task processing device may perform parallel extension on the executor. For example, when the quantity of to-be-processed tasks in the message queue is large, the quantity of executors may be increased, i.e., the task processing device may extend the executor, so as to prevent the tasks from being processed not in time or from being processed inefficiently due to the insufficient executors, thereby to improve the processing efficiency. In addition, the executor may also call computing resources in a cross-platform manner, e.g., call the computing resources from a server end to process the to-be-processed task, and thereby to further improve the processing efficiency.

In a possible embodiment of the present disclosure, after obtaining the task processing result of the to-be-processed task, the task processing device may store the task processing result in a database, so as to facilitate the subsequent query of the task processing result. Further, a processing state, task configuration information, the processing time information and the task processing result corresponding to a same to-be-processed task may be stored in the database in an associated manner, so as to enable the user to inquire such information of the task as the task processing result and the task processing state from the database conveniently.

It should be appreciated that, the task processing result includes that the task is processed unsuccessfully and that the task is processed successfully. In the case that the task processing result indicates the task is processed unsuccessfully, the task processing device may re-write the to-be-processed task into the corresponding message queue, so as to re-process the to-be-processed task. In a possible embodiment of the present disclosure, when a certain to-be-processed task has been continuously processed unsuccessfully for N times, the to-be-processed task may be stopped from being written into the message queue, i.e., the to-be-processed task may be stopped from being processed, where N is a positive integer greater than 1.

According to the embodiments of the present disclosure, upon the receipt of the task processing request for the to-be-processed task, the task processing device writes the to-be-processed task into the corresponding message queue in accordance with the service type of the to-be-processed task when the processing time information of the to-be-processed task meets the triggering condition, and then the to-be-processed task in the message queue is processed through the executor. The message queue corresponds to the service type of the to-be-processed task, i.e., the to-be-processed tasks of different service types correspond to respective different message queues, so it is able to perform classified management on, and effectively execute, the to-be-processed tasks on the basis of the service types, and receive and process tasks of different service types through only one task processing device. As compared with the related art where a respective task processing system or device needs to be created for each service type, in the embodiments of the present disclosure, the tasks of different service types may be received and processed through one task processing device, so it is able to effectively save system resources, and improve the development efficiency of the task processing.

In a possible embodiment of the present disclosure, S103 in Fig. 1 may include: processing the to-be-processed task in the message queue, and generating a version identity of the to-be-processed task in accordance with task information of the to-be-processed task and the processing time information; and obtaining the task processing result of the to-be-processed task, and associating and storing the task processing result and the version identity.

In the embodiments of the present disclosure, after the to-be-processed task has been written into the corresponding message queue, the task processing device processes the to-be-processed task in the message queue through the executor. In addition, each time the to-be-processed task is processed, the task processing device generates a version identity (ID) in accordance with the task information of the to-be-processed task and the processing time information of the to-be-processed task, and after the to-be-processed task has been processed, stores the task processing result of the to-be-processed task in the database in associated with the generated version ID.

It should be appreciated that, when the to-be-processed task is processed, a corresponding version ID may be generated in each task processing operation, and when the to-be-processed task is processed many times, a plurality of version IDs is generated. In this way, it is able to inquire such information of the to-be-processed task as the task processing result and the processing state in different task processing operations in accordance with different version IDs, thereby to enable the user to obtain processing conditions of the to-be-processed task in a more intuitive and definite manner. For the to-be-processed task which is processed unsuccessfully many times, it is able for the user to inquire the processing condition of the to-be-processed task in each task processing operation in accordance with the version ID, thereby to help the user to find a cause for a failure and improve a task processing success rate.

In a possible embodiment of the present disclosure, subsequent to obtaining the task processing result of the to-be-processed task and associating and storing the task processing result and the version identity, the task processing method further includes: obtaining a result query request for a target to-be-processed task, the result query request including processing time information of the target to-be-processed task; and obtaining a target version identity matching the processing time information of the target to-be-processed task, and determining a target task processing result matching the result query request in accordance with the target version identity.

The target to-be-processed task refers to any to-be-processed task whose task processing result needs to be inquired.

It should be appreciated that, when the to-be-processed task is processed, a corresponding version ID is generated in accordance with the task information and the processing time information of the to-be-processed task, and the processing time information refers to a time for processing the to-be-processed task. When the result query request for the target to-be-processed task has been received, i.e., when the task processing result of the target to-be-processed task in a certain processing operation needs to be inquired, the target version ID matching the processing time information may be determined in accordance with the processing time information of the target to-be-processed task, and thereby the corresponding task processing result may be obtained in accordance with the target version ID. In this way, it is able to accurately inquire the task processing result in a certain processing operation in accordance with the version ID, thereby to improve the query efficiency of the task processing result.

In a possible embodiment of the present disclosure, subsequent to determining the target task processing result matching the result query request in accordance with the target version identity, the task processing method further includes: in the case that the target task processing result does not meet a predetermined requirement, obtaining the task information of the target to-be-processed task in accordance with the target version identity; and re-writing the target to-be-processed task into the corresponding message queue in accordance with the task information of the target to-be-processed task, and re-processing the target to-be-processed task.

In a possible embodiment of the present disclosure, when the target task processing result does not meet the predetermined requirement, it may mean that the task processing result is failure or not up to standard. In this case, the task information of the corresponding target to-be-processed task is obtained in accordance with the target version ID corresponding to the target task processing result, and the task information may be configuration information of the to-be-processed task, e.g., a task processing procedure, a task processing requirement and a task execution validity. Then, the target to-be-processed task is re-written into the corresponding message queue in accordance with the task information of the target to-be-processed task, i.e., the message queue corresponding to the service type of the target to-be-processed task. In this way, it is able to re-process the target to-be-processed task through the executor, thereby to improve the success rate of the target to-be-processed task and effectively manage the tasks.

In the embodiments of the present disclosure, in the procedure of processing the to-be-processed task in the message queue, when a task processing time exceeds a predetermined value, the processing of the to-be-processed task is stopped. In this way, it is able to prevent the to-be-processed task from being processed for a too long time period, thereby to prevent the execution efficiency from being adversely affected when the executor operates at full capacity.

In a possible embodiment of the present disclosure, the executor is designed in the form of child progress. When the task processing time of the to-be-processed task exceeds the predetermined value, a parent progress of the executor may forcibly stop the processing progress of the to-be-processed task, so as to effectively control the task execution time and ensure the processing efficiency.

In a possible embodiment of the present disclosure, in S102 as shown in Fig. 1, the writing the to-be-processed task into the corresponding message queue in accordance with the service type of the to-be-processed task includes: writing the to-be-processed task into the corresponding message queue through a scheduler in accordance with the service type of the to-be-processed task; or in the case that the task processing result of the to-be-processed task does not need to be stored, writing the to-be-processed task into the corresponding message queue through a target network interface in accordance with the service type of the to-be-processed task.

In a possible embodiment of the present disclosure, the task processing device includes the scheduler. When the task processing request for the to-be-processed task has been received and the processing time information of the to-be-processed task meets a triggering time, the to-be-processed task may be written into the corresponding message queue through the scheduler. In the embodiments of the present disclosure, the to-be-processed tasks of different service types correspond to respective different message queues, and when the to-be-processed task is written into the corresponding message queue through the scheduler, it is able to orderly schedule the to-be-processed tasks of different service types.

For example, the task processing device may include a plurality of schedulers, and one scheduler corresponds to the to-be-processed task of a respective one service type, i.e., the scheduler is configured to write the to-be-processed tasks of a same service type into a same message queue. In addition, the to-be-processed task of one service type corresponds to a respective one scheduler and a respective one message queue. In this way, it is able to write the to-be-processed task into the corresponding message queue through the corresponding scheduler in accordance with the service type of the to-be-processed task, and schedule the to-be-processed tasks on the basis of their classes, thereby to orderly process the to-be-processed tasks and improve the processing efficiency.

In a possible embodiment of the present disclosure, the writing the to-be-processed task into the corresponding message queue through the scheduler in accordance with the service type of the to-be-processed task includes writing the to-be-processed task into the corresponding message queue through a target progress in the scheduler in accordance with the service type of the to-be-processed task, and the target progress is a progress corresponding to the service type of the to-be-processed task.

It should be appreciated that, one scheduler may include a plurality of progresses, and different progresses are used to schedule the to-be-processed tasks of different service types. For example, one scheduler may include a regular task scheduling progress, a one-time asynchronous task scheduling progress and a periodically-executed task scheduling progress, so as to schedule a task which needs to be executed regularly, a one-time asynchronous task and a task which needs to be executed at a certain time interval respectively. When the to-be-processed task is a task which needs to be executed at a certain time interval, the to-be-processed task may be written into the corresponding message queue through the periodically-executed task scheduling progress in the scheduler, and the task in the corresponding message queue may be just the task which needs to be executed at a certain time interval.

In the embodiments of the present disclosure, the scheduler in the task processing device may schedule the to-be-processed tasks of different types through respective different progresses, so as to increase the scheduling performance of the to-be-processed task, orderly schedule the to-be-processed tasks, and prevent the occurrence of scheduling chaos due to too many to-be-processed tasks.

The task processing device may include a plurality of schedulers, each scheduler includes a plurality of progresses, and different progresses correspond to respective different service types. A distributed lock is achieved among the plurality of schedulers through a manager of zookeeper, so as to ensure high availability of the schedulers.

In a possible embodiment of the present disclosure, for the to-be-processed task whose task processing result does not need to be reserved, the to-be-processed task may be directly written into the corresponding message queue through a target network interface provided by a web server, i.e., it is unnecessary to schedule and write the to-be-processed task through the scheduler. In this way, it is able to effectively reduce a load of the scheduler, and prevent the efficiency of the task processing device from being adversely affected when all the to-be-processed tasks are scheduled and written through the scheduler, thereby to efficiently process the to-be-processed task through the task processing device.

In order to understand the technical solutions in the embodiments of the present disclosure in a better manner, Fig. 2 provides another task processing method. In Fig. 2, a web service, a scheduler, a message queue, an executor and a database may be built-in modules or assemblies in the task processing device. As shown in Fig. 2, the user may create the task through an interface of the web service, the web service transmits the created task to a data intermediate layer (dbproxy), and a data layer writes the obtained task into a task table. The scheduler obtains the task from the data intermediate layer, or the data intermediate layer transmits the task to the scheduler. The tasks of different service types are processed through different schedulers. The task is written into the corresponding message queue through the scheduler, and the tasks of different service types correspond to different message queues. The executor obtains the task from the message queue, processes the task, and stores the task processing result in the database. For the task processing device, the distributed lock may be achieved through zookeeper, so as to ensure the high availability of the scheduler. In addition, the executor may further transmit the task processing result to the web service through the data intermediate layer. The user may inquire the task processing result through the web service, and perform such operations as task pausing, task deletion, task recovery and task configuration information modification through the web service. The task processing method may refer the specific description about the method in Fig. 1 with a same technical effect, which will not be further particularly defined herein.

The present disclosure further provides in some embodiments a task processing device.

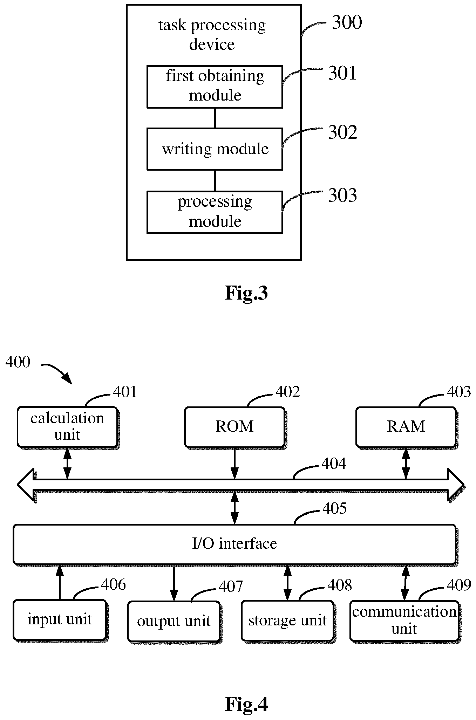

As shown in Fig. 3, the task processing device 300 includes: a first obtaining module 301 configured to obtain a task processing request for a to-be-processed task, the task processing request including processing time information of the to-be-processed task and a service type of the to-be-processed task; a writing module 302 configured to, in the case that the processing time information of the to-be-processed task meets a triggering condition, write the to-be-processed task into a corresponding message queue in accordance with the service type of the to-be-processed task, one message queue corresponding to a respective one service type; and a processing module 303 configured to process the to-be-processed task in the message queue, so as to obtain a task processing result of the to-be-processed task.

In a possible embodiment of the present disclosure, the processing module 303 is further configured to: process the to-be-processed task in the message queue, and generating a version ID of the to-be-processed task in accordance with task information of the to-be-processed task and the processing time information; and obtain the task processing result of the to-be-processed task, and associate and store the task processing result and the version ID.

In a possible embodiment of the present disclosure, the task processing device 300 further includes: a second obtaining module configured to obtain a result query request for a target to-be-processed task, the result query request including processing time information of the target to-be-processed task; and a determination module configured to obtain a target version identity matching the processing time information of the target to-be-processed task, and determine a target task processing result matching the result query request in accordance with the target version identity.

In a possible embodiment of the present disclosure, the task processing device 300 further includes: a third obtaining module configured to, in the case that the target task processing result does not meet a predetermined requirement, obtain the task information of the target to-be-processed task in accordance with the target version identity; and an execution module configured to re-write the target to-be-processed task into the corresponding message queue in accordance with the task information of the target to-be-processed task, and re-process the target to-be-processed task.

In a possible embodiment of the present disclosure, the writing module 302 is further configured to: write the to-be-processed task into the corresponding message queue through a scheduler in accordance with the service type of the to-be-processed task; or in the case that the task processing result of the to-be-processed task does not need to be stored, write the to-be-processed task into the corresponding message queue through a target network interface in accordance with the service type of the to-be-processed task.

In a possible embodiment of the present disclosure, the writing module 302 is further configured to write the to-be-processed task into the corresponding message queue through a target progress in the scheduler in accordance with the service type of the to-be-processed task, and the target progress is a progress corresponding to the service type of the to-be-processed task.

In a possible embodiment of the present disclosure, when the to-be-processed task in the message queue is being processed and a duration for processing the to-be-processed task exceeds a predetermined duration, the processing of the to-be-processed task is stopped.

It should be appreciated that, the task processing device 300 in the embodiments of the present disclosure is capable of implementing the task processing method in Figs. 1 and 2 with a same technical effect, which will not be further particularly defined herein.

The collection, storage, usage, processing, transmission, supply and publication of personal information involved in the embodiments of the present disclosure comply with relevant laws and regulations, and do not violate the principle of the public order.

The present disclosure further provides in some embodiments an electronic device, a computer-readable storage medium and a computer program product.

Fig. 4 is a schematic block diagram of an exemplary electronic device 400 in which embodiments of the present disclosure may be implemented. The electronic device is intended to represent all kinds of digital computers, such as a laptop computer, a desktop computer, a work station, a personal digital assistant, a server, a blade server, a main frame or other suitable computers. The electronic device may also represent all kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present disclosure described and/or claimed herein.

As shown in Fig. 4, the electronic device 400 includes a computing unit 401 configured to execute various processings in accordance with computer programs stored in a Read Only Memory (ROM) 402 or computer programs loaded into a Random Access Memory (RAM) 403 via a storage unit 408. Various programs and data desired for the operation of the electronic device 400 may also be stored in the RAM 403. The computing unit 401, the ROM 402 and the RAM 403 may be connected to each other via a bus 404. In addition, an input/output (I/O) interface 405 may also be connected to the bus 404.

Multiple components in the electronic device 400 are connected to the I/O interface 405. The multiple components include: an input unit 406, e.g., a keyboard, a mouse and the like; an output unit 407, e.g., a variety of displays, loudspeakers, and the like; a storage unit 408, e.g., a magnetic disk, an optic disk and the like; and a communication unit 409, e.g., a network card, a modem, a wireless transceiver, and the like. The communication unit 409 allows the electronic device 400 to exchange information/data with other devices through a computer network and/or other telecommunication networks, such as the Internet.

The computing unit 401 may be any general purpose and/or special purpose processing components having a processing and computing capability. Some examples of the computing unit 401 include, but are not limited to: a central processing unit (CPU), a graphic processing unit (GPU), various special purpose artificial intelligence (AI) computing chips, various computing units running a machine learning model algorithm, a digital signal processor (DSP), and any suitable processor, controller, microcontroller, etc. The computing unit 401 carries out the aforementioned methods and processes, e.g., the task processing method. For example, in some embodiments of the present disclosure, the task processing method may be implemented as a computer software program tangibly embodied in a machine readable medium such as the storage unit 408. In some embodiments of the present disclosure, all or a part of the computer program may be loaded and/or installed on the electronic device 400 through the ROM 402 and/or the communication unit 409. When the computer program is loaded into the RAM 403 and executed by the computing unit 401, one or more steps of the foregoing task processing method may be implemented. Alternatively, in some other embodiments of the present disclosure, the computing unit 401 may be configured in any other suitable manner (e.g., by means of firmware) to implement the task processing method.

Various implementations of the aforementioned systems and techniques may be implemented in a digital electronic circuit system, an integrated circuit system, a field-programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include an implementation in form of one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit data and instructions to the storage system, the at least one input device and the at least one output device.

Program codes for implementing the methods of the present disclosure may be written in one programming language or any combination of multiple programming languages. These program codes may be provided to a processor or controller of a general purpose computer, a special purpose computer, or other programmable data processing device, such that the functions/operations specified in the flow diagram and/or block diagram are implemented when the program codes are executed by the processor or controller. The program codes may be run entirely on a machine, run partially on the machine, run partially on the machine and partially on a remote machine as a standalone software package, or run entirely on the remote machine or server.

In the context of the present disclosure, the machine readable medium may be a tangible medium, and may include or store a program used by an instruction execution system, device or apparatus, or a program used in conjunction with the instruction execution system, device or apparatus. The machine readable medium may be a machine readable signal medium or a machine readable storage medium. The machine readable medium includes, but is not limited to: an electronic, magnetic, optical, electromagnetic, infrared, or semiconductor system, device or apparatus, or any suitable combination thereof. A more specific example of the machine readable storage medium includes: an electrical connection based on one or more wires, a portable computer disk, a hard disk, a random access memory (RAM), a read only memory (ROM), an erasable programmable read only memory (EPROM or flash memory), an optic fiber, a portable compact disc read only memory (CD-ROM), an optical storage device, a magnetic storage device, or any suitable combination thereof.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middle-ware component (e.g., an application server), or that includes a front-end component (e.g., a client computer having a graphical user interface or a Web browser through which a user can interact with an implementation of the system and technique), or any combination of such back-end, middleware, or front-end components. The components of the system can be interconnected by any form or medium of digital data communication (e.g., a communication network). Examples of communication networks include a local area network (LAN), a wide area network (WAN) and the Internet.

The computer system can include a client and a server. The client and server are generally remote from each other and typically interact through a communication network. The relationship of client and server arises by virtue of computer programs running on respective computers and having a client-server relationship to each other. The server may be a cloud server, a server of a distributed system, or a server combined with block chain.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The foregoing specific implementations constitute no limitation on the scope of the present disclosure. It is appreciated by those skilled in the art, various modifications, combinations, sub-combinations and replacements may be made according to design requirements and other factors. Any modifications, equivalent replacements and improvements made without deviating from the spirit and principle of the present disclosure shall be deemed as falling within the scope of the present disclosure.

## Claims

1. A tasking processing method, comprising:
obtaining (S101) a task processing request for a to-be-processed task, the task processing request comprising processing time information of the to-be-processed task and a service type of the to-be-processed task;
in the case that the processing time information of the to-be-processed task meets a triggering condition, writing (S102) the to-be-processed task into a corresponding message queue in accordance with the service type of the to-be-processed task, one message queue corresponding to a respective one service type; and
processing (S103) the to-be-processed task in the message queue, to obtain a task processing result of the to-be-processed task.

2. The task processing method according to claim 1, wherein the processing (S103) the to-be-processed task in the message queue to obtain the task processing result of the to-be-processed task comprises:
processing the to-be-processed task in the message queue, and generating a version identity of the to-be-processed task in accordance with task information of the to-be-processed task and the processing time information; and
obtaining the task processing result of the to-be-processed task, and associating and storing the task processing result and the version identity.

3. The task processing method according to claim 2, wherein subsequent to obtaining (S101) the task processing result of the to-be-processed task and associating and storing the task processing result and the version identity, the task processing method further comprises:
obtaining a result query request for a target to-be-processed task, the result query request comprising processing time information of the target to-be-processed task; and
obtaining a target version identity matching the processing time information of the target to-be-processed task, and determining a target task processing result matching the result query request in accordance with the target version identity.

4. The task processing method according to claim 3, wherein subsequent to determining the target task processing result matching the result query request in accordance with the target version identity, the task processing method further comprises:
in the case that the target task processing result does not meet a predetermined requirement, obtaining the task information of the target to-be-processed task in accordance with the target version identity; and
re-writing the target to-be-processed task into the corresponding message queue in accordance with the task information of the target to-be-processed task, and re-processing the target to-be-processed task.

5. The task processing method according to claim 1, wherein the writing (S102) the to-be-processed task into the corresponding message queue in accordance with the service type of the to-be-processed task comprises:
writing the to-be-processed task into the corresponding message queue through a scheduler in accordance with the service type of the to-be-processed task; or
in the case that the task processing result of the to-be-processed task does not need to be stored, writing the to-be-processed task into the corresponding message queue through a target network interface in accordance with the service type of the to-be-processed task.

6. The task processing method according to claim 5, wherein the writing the to-be-processed task into the corresponding message queue through the scheduler in accordance with the service type of the to-be-processed task comprises:
writing the to-be-processed task into the corresponding message queue through a target progress in the scheduler in accordance with the service type of the to-be-processed task, wherein the target progress is a progress corresponding to the service type of the to-be-processed task.

7. The task processing method according to claim 1, wherein when the to-be-processed task in the message queue is being processed and a duration for processing the to-be-processed task exceeds a predetermined duration, the processing of the to-be-processed task is stopped.

8. A task processing device (300), comprising:
a first obtaining module (301) configured to obtain a task processing request for a to-be-processed task, the task processing request comprising processing time information of the to-be-processed task and a service type of the to-be-processed task;
a writing module (302) configured to, in the case that the processing time information of the to-be-processed task meets a triggering condition, write the to-be-processed task into a corresponding message queue in accordance with the service type of the to-be-processed task, one message queue corresponding to a respective one service type; and
a processing module (303) configured to process the to-be-processed task in the message queue, to obtain a task processing result of the to-be-processed task.

9. The task processing device (300) according to claim 8, wherein the processing module (303) is further configured to:
process the to-be-processed task in the message queue, and generating a version identity of the to-be-processed task in accordance with task information of the to-be-processed task and the processing time information; and
obtain the task processing result of the to-be-processed task, and associate and store the task processing result and the version identity.

10. The task processing device (300) according to claim 9, further comprising:
a second obtaining module configured to obtain a result query request for a target to-be-processed task, the result query request comprising processing time information of the target to-be-processed task; and
a determination module configured to obtain a target version identity matching the processing time information of the target to-be-processed task, and determine a target task processing result matching the result query request in accordance with the target version identity.

11. The task processing device (300) according to claim 10, further comprising:
a third obtaining module configured to, in the case that the target task processing result does not meet a predetermined requirement, obtain the task information of the target to-be-processed task in accordance with the target version identity; and
an execution module configured to re-write the target to-be-processed task into the corresponding message queue in accordance with the task information of the target to-be-processed task, and re-process the target to-be-processed task.

12. The task processing device (300) according to claim 8, wherein the writing module (302) is further configured to:
write the to-be-processed task into the corresponding message queue through a scheduler in accordance with the service type of the to-be-processed task; or
in the case that the task processing result of the to-be-processed task does not need to be stored, write the to-be-processed task into the corresponding message queue through a target network interface in accordance with the service type of the to-be-processed task.

13. The task processing device (300) according to claim 12, wherein the writing module (302) is further configured to:
write the to-be-processed task into the corresponding message queue through a target progress in the scheduler in accordance with the service type of the to-be-processed task, wherein the target progress is a progress corresponding to the service type of the to-be-processed task.

14. The task processing device (300) according to claim 8, wherein when the to-be-processed task in the message queue is being processed and a duration for processing the to-be-processed task exceeds a predetermined duration, the processing of the to-be-processed task is stopped.

15. A non-transient computer-readable storage medium storing therein a computer instruction, wherein the computer instruction is configured to be executed by a computer to implement the task processing method according to any one of claims 1 to 7.
